# EUROPÄISCHE PATENTSCHRIFT

(11) **EP 3 685 037 B1**
(45) Veröffentlichungstag und Bekanntmachung des Hinweises auf die Patenterteilung: **08.11.2023**
(21) Anmeldenummer: 18769629.9
(22) Anmeldetag: 07.09.2018
(51) Int. Cl.: F03D 7/02

(54) **VERFAHREN FÜR EINE WINDENERGIEANLAGE IM NOTBETRIEB SOWIE STEUERUNG UND WINDENERGIEANLAGE**
METHOD FOR OPERATING A WIND TURBINE IN EMERGENCY MODE, AND CONTROLLER AND WIND TURBINE
PROCÉDÉ POUR UNE ÉOLIENNE EN RÉGIME DE SECOURS, COMMANDE ET ÉOLIENNE

(30) Priorität: 20.09.2017 DE 102017121750
(43) Veröffentlichungstag der Anmeldung: 29.07.2020
(73) Patentinhaber: Wobben Properties GmbH, 26607 Aurich (DE)
(72) Erfinder: HARMS, Harro, 26639 Wiesmoor (DE); BERGEMANN, Constantin, 22763 Hamburg (DE)
(74) Vertreter: Eisenführ Speiser
(86) Internationale Anmeldenummer: PCT/EP2018/074156
(87) Internationale Veröffentlichungsnummer: WO 2019/057522

(56) Entgegenhaltungen:
- EP-A2- 2 169 219
- US-A1- 2011 076 142
- US-A1- 2013 230 400

## Beschreibung

Die Erfindung betrifft ein Verfahren für eine Windenergieanlage im Notbetrieb sowie eine Steuerung und eine Windenergieanlage.

Gemäß dem Stand der Technik weisen Windenergieanlagen mehrere Komponenten auf, die sich in Abhängigkeit der vorherrschenden Windgegebenheiten einstellen lassen, um den Energieertrag einer Windenergieanlage zu maximieren. Für die Einstellung oder Verstellung der einstellbaren Komponenten wird Energie benötigt.

Demnach lassen sich bei modernen Windenergieanlagen beispielsweise die Rotorblätter eines aerodynamischen Rotors um ihre Längsachse drehen, also verstellen, sodass die Rotorblätter ideal durch den Wind angeströmt werden. Ein dadurch resultierender Auftrieb der Rotorblätter dient, um ein Drehmoment in einem durch den aerodynamischen Rotor angetriebenen Rotor eines Generators zu erzeugen. So lässt sich die kinetische Windenergie mit dem Generator der Windenergieanlage in elektrische Energie wandeln.

Außerdem umfassen moderne Windenergieanlagen eine Windrichtungsnachführung, um den gesamten aerodynamischen Rotor in die vorherrschende Windrichtung auszurichten. Die Windrichtungsnachführung wird auch Azimuteinstellung genannt. Somit wird die Rotorblattebene, nämlich eine Ebene, in der die Rotorblätter einer Windenergieanlage rotieren, stets im Wesentlichen senkrecht zur Windanströmung ausgerichtet, sodass hierdurch eine symmetrische Anströmung des Rotors gewährleistet wird. Durch die symmetrische Anströmung werden Biegemomente reduziert und der Ertrag maximiert.

Eine Anströmung des Rotors bezeichnet demnach das Verhältnis zwischen Windrichtung und Rotorstellung. Bei einer symmetrischen Anströmung ist die Rotorebene durch die Windrichtungsnachführung im Wesentlichen senkrecht zur Windrichtung ausgerichtet oder anders ausgedrückt, die Rotationsachse des Rotors ist bei einer symmetrischen Anströmung parallel zu einem Richtungsvektor des aktuellen Windes ausgerichtet. Daher wird für die symmetrische Anströmung auch der Begriff Parallelanströmung verwendet. Weiter trifft bei einer symmetrischen Anströmung der Wind von vorne, also von der Seite des Rotors, die nicht zur Gondel der Windenergieanlage zeigt, auf die Rotorebene.

Es gibt jedoch Situationen, in denen es nicht möglich ist, die Komponenten der Windenergieanlage an die sich verändernden Windgegebenheiten anzupassen. Hier sei beispielsweise der Notbetrieb einer Windenergieanlage genannt, bei dem die Windenergieanlage vom Netz getrennt ist und somit keine Energie zum Verstellen der mechanischen Komponenten der Windenergieanlage aus dem Netz entnehmen kann.

Für diese Situationen sind daher die mechanischen Komponenten der Windenergieanlage, insbesondere die Rotorachse, mit der der Rotor lagernd am feststehenden Teil der Windenergieanlage gelagert ist, überdimensioniert ausgelegt, um Beschädigungen durch Belastungen, beispielsweise bei einer Queranströmung, zu vermeiden.

Demnach sind Windenergieanlagen also stabiler ausgebildet, als es für den normalen Betrieb, bei dem Energie aus dem Netz entnommen und eingespeist werden kann, notwendig wäre. Eine derartige zusätzliche Stabilität verursacht jedoch zusätzliche Herstellungskosten und reduziert auch im normalen Betrieb teilweise die Effizienz und damit den Ertrag einer Windenergieanlage.

Aus dem Stand der Technik ist es daher bekannt, Energiespeicher in der Windenergieanlage vorzusehen, um die Rotorblätter auch im Notbetrieb in eine vordefinierte Stellung zu überführen. Dadurch kann ein Trudeln der Rotorblätter ermöglicht werden, sodass zumindest die Rotationsgeschwindigkeit des Rotors im Notbetrieb, wenn keine Bremseinrichtung für den Rotor vorgesehen ist, sicher unter einer vorbestimmten Rotationsgeschwindigkeitsobergrenze gehalten werden kann.

Ein Notbetrieb, der aufgenommen wird, sobald die Windenergieanlage vom Netz getrennt wird, sieht demnach vor, dass die Rotorblätter aus der aktuellen Position einmalig in eine vordefinierte Stellung überführt werden. Für dieses einmalige Verstellen sind entsprechende Notenergiequellen ausgelegt. Ein Verstellen der Windrichtungsnachführung oder Azimuteinstellung, also eine Einstellung des Azimutwinkels, wird bislang im Notbetrieb nicht vorgesehen, weil die hierfür benötigte Energie, die ebenfalls in Notenergiespeichern vorgesehen werden müsste, sehr hoch wäre und daher ein Bereitstellen einer Notenergieversorgung von der vielfachen Größe einer Notenergieversorgung zur Verstellung der Rotorblätter notwendig wäre. Dementsprechend ist weiterhin eine Überdimensionierung der Windenergieanlage nötig, um eine Beschädigung im Notfall bei Schräganströmung zu vermeiden.

Aufgabe der vorliegenden Erfindung ist es, einem der zuvor zum Stand der Technik genannten Probleme zu begegnen. Insbesondere sollen die Stabilitätsanforderungen an Windenergieanlagen reduziert werden, um eine Überdimensionierung der Windenergieanlagen, die für Fälle der Schräganströmung im Notbetrieb ausgelegt sein muss, möglichst zu vermeiden oder das Maß der Überdimensionierung zumindest zu minimieren. Das Deutsche Patent- und Markenamt hat in der Prioritätsanmeldung zu vorliegender Anmeldung den folgenden Stand der Technik recherchiert: US 2011/0076142 A1, WO 2007/132303 A1, US 2010/0078939 A1 und US 2011/0280725 A1.

Ein weiteres Dokument aus dem Stand der Technik ist EP 2169219 A2.

Hierzu umfasst die Erfindung ein Verfahren für eine Windenergieanlage im Notbetrieb.

Die Windenergieanlage befindet sich demnach im Notbetrieb und ist somit vom Stromnetz getrennt. Eine Trennung vom Stromnetz bedeutet hier nicht zwingend, dass eine physikalische Trennung erfolgt sein muss, umfasst jedoch auch diesen Fall. Jedenfalls bedeutet eine Trennung vom Netz, dass keine Energie für den Betrieb der Windenergieanlage aus dem Netz entnommen werden kann. Mit Netz ist ein Stromversorgungsnetz gemeint, über das die Windenergieanlage im normalen Betrieb die generierte Energie bereitstellt, um diese beispielsweise Verbrauchern zuzuführen.

Gemäß dem Verfahren wird eine Änderung einer Windrichtung detektiert. Zusätzlich oder alternativ wird eine Änderung mindestens einer auf die Windenergieanlage wirkenden Kraft detektiert. Daraufhin wird unter Beibehalten des aktuellen Azimutwinkels der Azimuteinstellung mindestens eines der Rotorblätter in einen anderen Winkel verstellt, wobei dieser Winkel von der detektierten Änderung abhängig ist.

Detektieren ist hier nicht als Messen zu verstehen. Vielmehr wird vorzugsweise zum Detektieren einer Windrichtungsänderung zunächst die Windrichtung und/oder zum Detektieren einer Kraftänderung zunächst die Kraft kontinuierlich oder intervallweise, vorzugsweise absolut, gemessen. Erst dann wird eine Änderung aus dieser Messung unter Berücksichtigung vorheriger Messungen, zum Beispiel in einer Steuerung, detektiert, wenn sich die Messwerte für eine aktuell gemessene Windrichtung und/oder Kraft von einer zuvor gemessenen Windrichtung bzw. Kraft unterscheiden.

Eine Änderung der Windrichtung bedeutet, dass zunächst eine erste Windrichtung vorliegt und sich diese in eine zweite Windrichtung ändert. Diese Änderung von der ersten Windrichtung in die zweite Windrichtung entspricht dann einer detektierbaren Änderung der Windrichtung. Eine Änderung einer auf die Windenergieanlage wirkenden Kraft betrifft eine Änderung einer Kraft, die vorzugsweise durch den aktuellen oder vorherrschenden Wind ausgeübt wird. Ändert sich der Wind, also insbesondere die Windrichtung oder Windstärke, so ändern sich bestimmte Kräfte, die auf die Windenergieanlage, insbesondere die Komponenten der Windenergieanlage, wirken. Mindestens eine dieser Kraftänderungen, die vorzugsweise vordefiniert ist, ändert sich also in Abhängigkeit des Windes, wobei diese Änderung detektiert wird.

Hierzu dienen beispielsweise ein oder mehrere Sensoren wie Dehnungsmessstreifen, die zum Beispiel am Turm und/oder den Rotorblättern angeordnet sind. Vorzugsweise sind hierfür drei oder vier Sensoren am Turm gleichmäßig in Umfangsrichtung angeordnet. Unter Kraft wird hier allgemein auch jede Kraftgröße verstanden, die neben direkt wirkenden Kräften auch Momente, insbesondere Biegemomente, oder andere Lasten umfasst.

Gemäß dem Verfahren wird also die Windrichtung oder mindestens eine Kraft überwacht, gemessen oder erfasst, und im Falle, dass sich die Windrichtung oder Kraft ändert, diese Änderung detektiert, sodass dann die weiteren Schritte des Verfahrens ausgeführt werden. Es wird somit mindestens eines der Rotorblätter unterschiedlich zu der Stellung eingestellt, die vor der Windrichtungsänderung oder Kraftänderung eingenommen wurde. Weist also das Rotorblatt eine erste Stellung bei der ersten Windrichtung oder Kraft auf, wird das Rotorblatt so verstellt, dass es nach der Änderung, also bei der zweiten Windrichtung oder Kraft, eine zweite Stellung aufweist.

Hierdurch wird ermöglicht, dass im Falle, dass eine Schräganströmung der Windenergieanlage erfolgt und eine Verstellung des Azimutwinkels aufgrund des Notbetriebs nicht möglich ist, trotzdem die auf die Windenergieanlage durch den Wind wirkende Kraft minimiert werden kann. Eine Belastung der Windenergieanlage wird somit bei Schräganströmung reduziert und die Windenergieanlage muss somit nicht oder zumindest geringer überdimensioniert werden.

Gemäß einer ersten Ausführungsform wird das mindestens eine Rotorblatt in einen Winkel verstellt, der sich von einem Winkel für eine Fahnenstellung, insbesondere im Falle einer symmetrischen Anströmung, bei dem beibehaltenen Azimutwinkel, nämlich den aktuellen Azimutwinkel, unterscheidet.

Gemäß einer weiteren Ausführungsform erfolgt die Verstellung mindestens eines der Rotorblätter, nachdem eine Änderung der Windrichtung und/oder eine Änderung der Kraft detektiert wurde so, dass ein Winkel des Rotorblatts auf den Winkel eingestellt wird, aus dem die Kräfte und/oder die Biegemomente auf das wenigstens eine Rotorblatt und/oder den Rotor und/oder die Rotorachse, resultieren, die im Vergleich zu einem oder mehreren anderen Winkeln minimiert sind. Vorzugsweise wird das Rotorblatt in eine Fahnenstellung zur neuen Windrichtung, also der Windrichtung nach der Änderung, gebracht, sodass durch diese Windrichtung auftretende Kräfte auf die Saug- und Druckseite sich im Wesentlichen aufheben.

Somit werden die auf die Windenergieanlage resultierenden Kräfte bei Schräganströmung reduziert.

Gemäß einer weiteren Ausführungsform wird eine Änderung der Windrichtung detektiert, wenn ein horizontaler Differenzwinkel zwischen einer ersten Windrichtung und einer zweiten Windrichtung oberhalb einem vordefinierten Differenzwinkelschwellenwert liegt. Dementsprechend wird keine Änderung der Windrichtung detektiert und die Rotorblätter verbleiben in der aktuellen Stellung, solange der Differenzwinkel auf oder unter dem Differenzwinkelschwellenwert liegt. Hierdurch wird vermieden, dass bei geringen Differenzwinkeln bereits eine Blattverstellung erfolgt, obwohl noch keine hohen Lasten durch die somit nur geringe Schräganströmung auf das Rotorblatt bzw. die Windenergieanlage ausgeübt werden. Ein unnötiges Hin- und Herstellen der Rotorblätter wird somit vermieden. Der Differenzwinkelschwellenwert liegt vorzugsweise in einem Bereich von 1 bis 10 Grad, insbesondere in einem Bereich von 2 bis 5 Grad, und kann durch Simulation vorbestimmt werden.

Zusätzlich oder alternativ wird gemäß dieser Ausführungsform eine Änderung der auf die Windenergieanlage ausgeübten Kraft detektiert, wenn eine Differenzkraft zwischen einer ersten detektierten Kraft und einer zweiten detektierten Kraft oberhalb einem ersten vordefinierten Differenzkraftschwellenwert liegt. Ebenso wird keine Änderung der auf die Windenergieanlage ausgeübten Kraft detektiert, wenn die Differenzkraft auf oder unter dem Differenzkraftschwellenwert liegt.

Gemäß der Erfindung wird eine Windgeschwindigkeit bestimmt und mit einem vordefinierten Windgeschwindigkeitsschwellenwert verglichen. Liegt die Windgeschwindigkeit oberhalb dem vordefinierten Windgeschwindigkeitsschwellenwert, so werden im Falle, dass eine Änderung der Windrichtung oder der Kraft auf die Windenergieanlage detektiert wird, der Azimutwinkel beibehalten und gleichzeitig das mindestens eine Rotorblatt in einen anderen Winkel verstellt. Liegt die Windgeschwindigkeit unterhalb oder auf dem Windgeschwindigkeitsschwellenwert, verbleiben die Rotorblätter in der aktuellen Stellung. Dieses Bestimmen der Windgeschwindigkeit und Vergleichen mit dem Windgeschwindigkeitsschwellenwert erfolgt vorzugsweise vor dem Schritt des Detektierens einer Änderung der Windrichtung. Der Windgeschwindigkeitsschwellenwert kann ebenfalls durch Simulation vorbestimmt werden.

Hier wird berücksichtigt, dass erst ab dem Auftreten bestimmter Kräfte, die durch hohe Windgeschwindigkeiten hervorgerufen werden, Beschädigungen an der Windenergieanlage auftreten können. Bleiben Windgeschwindigkeiten unterhalb dieser Grenze, die hier als Windgeschwindigkeitsschwellenwert bezeichnet wird, so besteht keine Gefahr für die Windenergieanlage und daher auch nicht der Bedarf des Verstellens. Wie zuvor können gemäß diesem Ausführungsbeispiel demnach unnötige Verstellvorgänge des oder der Rotorblätter vermieden werden.

Gemäß einer weiteren Ausführungsform wird die Änderung der mindestens einen Kraft, die auf mindestens ein Bestandteil der Windenergieanlage, insbesondere auf eines oder mehrere Rotorblätter, den Rotor oder die Rotorachse, wirkt, detektiert, wenn eine überwachte Kraft einen vordefinierten Kraftschwellenwert überschreitet. Zur Überwachung der Kraft dient beispielsweise ein Sensor, wie zum Beispiel ein Dehnungsmessstreifen. Es werden damit beispielsweise Biegekräfte auf die Rotorachse oder eines oder mehrerer Rotorblätter gemessen und aus der Messung mindestens eine Kraft, die auf mindestens ein Bestandteil der Windenergieanlage wirkt, bestimmt. Diese Kraft oder Kräfte werden dann mit einem Kraftschwellenwert verglichen.

Das Detektieren einer Änderung sowie das Beibehalten des Azimutwinkels der Azimuteinstellung und das Verstellen mindestens eines der Rotorblätter erfolgt dann nur, wenn die bestimmte Kraft oberhalb einem Kraftschwellenwert liegt. Liegt die Kraft unterhalb des Kraftschwellenwerts oder auf dem Kraftschwellenwert, so verbleiben die Rotorblätter in der aktuellen Stellung. Dieses Bestimmen der mindestens einen Kraft und Vergleichen mit dem Kraftschwellenwert erfolgt vorzugsweise vor dem Schritt des Detektierens einer Änderung der Windrichtung. Der Kraftschwellenwert kann ebenfalls durch Simulation vorbestimmt werden.

Zusätzlich zur Windgeschwindigkeit kann somit eine durch den Wind auf die Windenergieanlage ausgeübte Kraft bestimmt werden und durch Festlegen des Kraftschwellenwerts erst dann mindestens eines der Rotorblätter verstellt werden, sobald diese Kraft zu einer Beschädigung der Windenergieanlage führen könnte. Besteht andererseits demnach durch die bestimmte auftretende Kraft nicht die Gefahr der Beschädigung, so kann ein Verstellen der Rotorblätter vermieden werden.

Gemäß einer weiteren Ausführungsform wird die Energie für das Verstellen der Rotorblätter aus einer Notstromversorgung, insbesondere einem Akkumulator, der Windenergieanlage entnommen.

Das Verfahren wird demnach im Notbetrieb ausgeführt, wenn also keine Energie aus dem Netz, an das die Windenergieanlage angeschlossen ist, entnommen werden kann. Durch Bereitstellen einer Notstromversorgung und Versorgen der Motoren für die Verstellung der Rotorblätter kann somit ein Verstellen der Rotorblätter erfolgen, ohne Energie aus dem Netz entnehmen zu müssen.

Gemäß einer weiteren Ausführungsform ist die Notstromversorgung im Notbetrieb für zwei oder mehr Verstellvorgänge aller Rotorblätter ausgelegt oder dimensioniert, insbesondere wenn davon ausgegangen wird, dass jeder Verstellvorgang eine Drehung jedes Rotorblatts um seine Längsachse um mindestens 90 Grad umfasst. Eine mehrfache Verstellung der Rotorblätter bei sich mehrfach verändernder Schräganströmung während des Notbetriebs ist somit möglich. So können, nachdem beispielsweise eine erste Änderung einer Windrichtung detektiert wurde und die Rotorblätter entsprechend verstellt wurden, bei einer weiteren Änderung der Windrichtung die Rotorblätter erneut eingestellt werden.

Gemäß einer weiteren Ausführungsform sind die Rotorblätter um 360 Grad um die Längsachse herum drehbar. Ändert sich demnach die Windrichtung um 180 Grad gegenüber einer symmetrischen Anströmung von der Vorderseite des Rotors, zeigt der Richtungsvektor des Windes nach der Windrichtungsänderung demnach auf die Rückseite der Rotorblattebene. In diesem Fall lassen sich die Rotorblätter um 180 Grad verstellen. Bei Queranströmungen lassen sich die Rotorblätter jeweils entsprechend um 90 Grad oder um 270 Grad gegenüber einer Fahnenstellung bei Parallelanströmung, also bei symmetrischer Anströmung, gesehen bei dem aktuellen Azimutwinkel, verstellen. Unabhängig von der Windrichtung können die Rotorblätter somit so eingestellt werden, dass eine möglichst geringe Kraft durch den Wind auf die Rotorblätter unabhängig von dem Azimutwinkel wirkt.

Gemäß einer weiteren Ausführungsform sind die Rotorblätter einzeln verstellbar. Somit ist jedes Rotorblatt so einstellbar, dass eine möglichst geringe Kraft durch den Wind auf das jeweilige Rotorblatt wirkt.

Ferner umfasst die Erfindung eine Steuerung für eine Windenergieanlage, die eingerichtet ist, das Verfahren nach einer der vorgenannten Ausführungsformen auszuführen. Vorzugsweise umfasst die Steuerung hierfür eine Recheneinheit und ein oder mehrere Sensoren, insbesondere zur Detektion der Windrichtung, der Windgeschwindigkeit, mindestens einer Kraft, die auf ein Bestandteil der Windenergieanlage wirkt, und/oder weiterer Parameter als Sensordaten. Die Windenergieanlage ist dann eingerichtet, die Sensordaten an die Steuerung zu übertragen.

Ferner dient die Steuerung zum Betrieb der Windenergieanlage in einem Notbetrieb mit einer Notstromversorgung, zum Verstellen der Rotorblätter. Hierbei ist die Steuerung eingerichtet, Aktuatoren zum Verstellen der Rotorblätter zu veranlassen, sich entsprechend einer in der Steuerung bestimmten Stellung zu verstellen. Die Verstellung wird in Abhängigkeit einer detektierten Änderung der Windrichtung bestimmt.

Außerdem betrifft die Erfindung eine Windenergieanlage mit einer Steuerung nach einer der vorgenannten Ausführungsformen.

Weitere Ausführungsformen ergeben sich anhand der in den Figuren näher erläuterten Ausführungsbeispiele.
- Fig. 1: zeigt eine Windenergieanlage in einer Seitenansicht,
- Fig. 2: eine Windenergieanlage in der Draufsicht mit Rotorblättern in Fahnenstellung,
- Fig. 3: die Ansicht aus Fig. 2 mit veränderter Rotorblattstellung,
- Fig. 4: die Draufsicht aus den Figuren 2 und 3 mit wiederum geänderter Rotorblattstellung und
- Fig. 5: die Schritte eines Ausführungsbeispiels des Verfahrens.

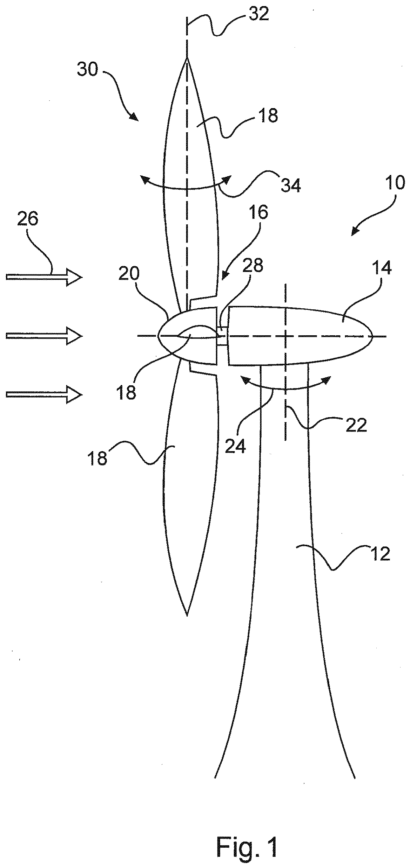

Fig. 1 zeigt eine Windenergieanlage 10 mit einem Turm 12 und einer Gondel 14. An der Gondel 14 ist ein aerodynamischer Rotor 16 mit drei Rotorblättern 18 und einem Spinner 20 angeordnet. Der Rotor 16 wird im Betrieb durch den Wind in eine Drehbewegung versetzt und treibt dadurch einen Generator in der Gondel 14 an.

Die Gondel 14 ist um eine senkrechte Achse 22 in Pfeilrichtung 24 verstellbar. Diese Verstellung wird auch Azimuteinstellung oder Windrichtungsnachführung genannt und dient somit zum Einstellen des Azimutwinkels der Windenergieanlage 10. Die Azimuteinstellung dient demnach zum Ausrichten des Rotors 16 auf die vorherrschende Windrichtung 26. Der hier dargestellte Azimut oder Azimutwinkel ist beispielsweise als Azimutwinkel von null Grad definiert. Bei dem hier dargestellten Azimutwinkel sowie der vorherrschenden Windrichtung 26 wird von einer Parallelanströmung oder einer symmetrischen Anströmung gesprochen. Dies ist der Fall, wenn der Wind 26 im Wesentlichen parallel zu einer Rotorachse 28 von der Vorderseite 30 auf den Rotor 16 trifft.

Die Rotorblätter 18 lassen sich um ihre Längsachse 32 ebenfalls drehen. Dies ist durch den Pfeil 34 dargestellt. Im vorliegenden Fall sind die Rotorblätter 18 in einer Fahnenstellung ausgerichtet. Das heißt, der Wind, der aus der Windrichtung 26 auf den Rotor 16 trifft, erzeugt kein oder nur ein geringes Drehmoment auf die Rotorachse 28. Grund hierfür ist, dass die Stellung der Rotorblätter 18 bewirkt, dass die auf das jeweilige Rotorblatt 18 wirkenden Kräfte sich im Wesentlichen aufheben bzw. zu Null addieren.

Diese Fahnenstellung wird vorzugsweise eingenommen, wenn die Windenergieanlage 10 keine Energie in das Netz einspeisen soll oder sich die Windenergieanlage 10 in einem Notbetrieb befindet, bei dem keine Energie zur weiteren kontrollierten Verstellung der Windenergieanlage 10 aus dem Netz entnommen werden kann.

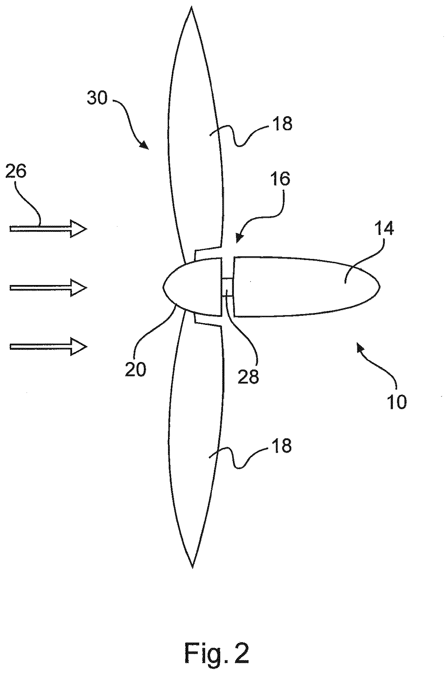

Fig. 2 zeigt die Windenergieanlage 10 aus Fig. 1 in der Draufsicht. Gleiche Bezugsziffern entsprechen gleichen Merkmalen. Auch in Fig. 2 ist die Windenergieanlage 10 zum Wind ausgerichtet und es liegt somit eine Parallelanströmung vor. Die Rotorblätter 18 sind ebenfalls in Fahnenstellung angestellt. Die Belastung auf die Windenergieanlage 10 ist somit minimal.

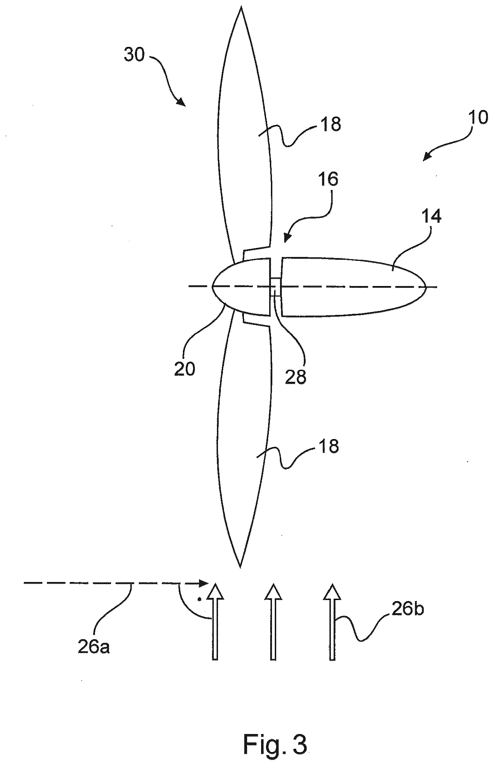

Fig. 3 zeigt nun ein erstes Beispiel für verstellte Rotorblätter 18 gemäß dem erfindungsgemäßen Verfahren. Hierbei hat sich nun die Windrichtung 26 um 90 Grad von der ersten Windrichtung 26a, wie sie in Fig. 2 dargestellt ist, in eine zweite Windrichtung 26b im Uhrzeigersinn gegenüber der Windrichtung in Fig. 2 gedreht. Demnach wird nun nicht mehr von einer Parallelanströmung, wie in Fig. 2 gezeigt, sondern von einer Schräganströmung allgemein oder hier im Speziellen von einer Queranströmung gesprochen. Entsprechend wird von der Windenergieanlage 10 detektiert, dass eine Änderung der Windrichtung von der ersten Windrichtung 26a in die zweite Windrichtung 26b erfolgt ist. Alternativ oder zusätzlich kann diese Windrichtungsänderung auch durch eine Änderung einer auf die Windenergieanlage 10 wirkenden Kraft detektiert werden. Lasten oder Laständerungen werden hierzu beispielsweise mit Dehnungsmessstreifen überwacht.

Wie in Fig. 3 dargestellt, wird der Azimutwinkel der Azimuteinstellung trotz Änderung der Windrichtung beibehalten und die Rotorblätter 18 in einen anderen Winkel, der auch zweiter Winkel genannt werden kann, verfahren. Der zweite Winkel unterscheidet sich von einem Winkel für eine Fahnenstellung bei Parallelanströmung bei der aktuellen Azimutausrichtung. Demnach sind nämlich die Rotorblätter 18 nun so zum Wind gestellt, dass eine möglichst geringe Kraft durch den Wind auf die Rotorblätter 18 wirkt. In Fig. 3 ist erkennbar, dass die Rotorblätter 18 um 90 Grad gegenüber der Stellung in Fig. 2 verstellt sind.

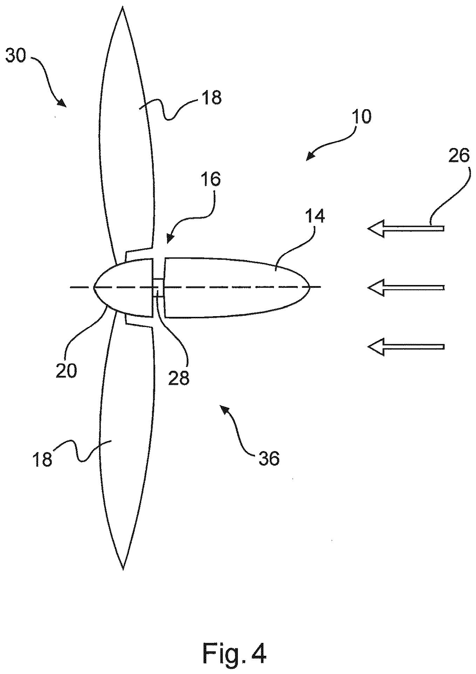

Ein weiteres Beispiel für eine detektierte geänderte Windrichtung 26 und/oder geänderte Kraft auf die Windenergieanlage 10 ist in Fig. 4 dargestellt, bei der die Windrichtung 26 nun auf die Rückseite der Windenergieanlage 10 gerichtet ist. Auch hier werden die Rotorblätter 18 unter Beibehalten des Azimutwinkels verstellt, da eine Änderung der Windrichtung oder Kraft, nämlich eine Windrichtung detektiert wurde, die unterschiedlich zur Parallelanströmung bei der aktuellen Azimutausrichtung ist. Die Rotorblätter 18 sind hier so verstellt, dass diese aus der Windrichtung 26 gesehen in Fahnenstellung sind, wobei sich diese Fahnenstellung von der Fahnenstellung bei Parallelanströmung bei der aktuellen Azimutausrichtung, wie in Fig. 2, unterscheidet.

Abhängig von der Windrichtung 26 wird somit die Stellung der Rotorblätter 18, nämlich der Pitchwinkel, an die sich ändernden Windrichtungen 26 angepasst.

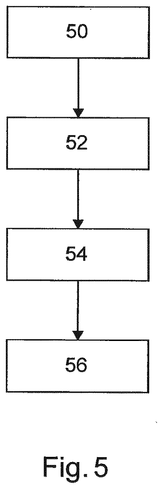

Fig. 5 zeigt ein Ausführungsbeispiel der Schritte des Verfahrens gemäß einem Ausführungsbeispiel. Im Schritt 50 wird die Windrichtung 26 oder eine Kraft auf die Windenergieanlage 10 überwacht und im Schritt 52 detektiert, dass die Windrichtung 26 oder die Kraft sich geändert hat. Daher wird im Schritt 54 der Azimutwinkel der Azimuteinstellung der Windenergieanlage 10 beibehalten und im Schritt 56 die Rotorblätter 18 in Abhängigkeit der geänderten Windrichtung 26 verstellt.

## Patentansprüche

1. Verfahren für eine Windenergieanlage (10) im Notbetrieb mit folgenden Schritten:
a) Detektieren (52) einer Änderung einer Windrichtung (26) und/oder einer Änderung mindestens einer auf die Windenergieanlage ausgeübten Kraft,
b) Beibehalten (54) des Azimutwinkels der Azimuteinstellung und
c) Verstellen (56) mindestens eines der Rotorblätter (18) in Abhängigkeit der detektierten Änderung,
**dadurch gekennzeichnet, dass** die Windgeschwindigkeit (26) bestimmt wird und der Schritt c) nur dann ausgeführt wird, wenn die Windgeschwindigkeit (26) oberhalb einem vordefinierten Windgeschwindigkeitsschwellenwert liegt.

2. Verfahren nach Anspruch 1, wobei in Schritt c) das mindestens eine Rotorblatt (18) in einen Winkel verstellt wird, der sich von einem Winkel für eine Fahnenstellung des Rotorblatts (18) bei dem beibehaltenen Azimutwinkel unterscheidet.

3. Verfahren nach Anspruch 1 oder 2, wobei das mindestens eine Rotorblatt (18) in Schritt c) auf einen Winkel eingestellt wird, bei dem die oder eine andere Kraft auf die Windenergieanlage, insbesondere auf das wenigstens eine Rotorblatt (18) und/oder den Rotor (16) und/oder die Rotorachse (28) wirkende Kräfte und/oder Biegemomente im Vergleich zu mehreren oder allen anderen Winkeln minimiert wird.

4. Verfahren nach einem der vorhergehenden Ansprüche, wobei eine Änderung einer Windrichtung (26) detektiert wird, wenn ein horizontaler Differenzwinkel zwischen einer ersten und einer zweiten Windrichtung (26) oberhalb einem vordefinierten Differenzwinkelschwellenwert liegt, und keine Änderung der Windrichtung (26) detektiert wird, wenn der Differenzwinkel auf oder unter dem Differenzwinkelschwellenwert liegt und/oder
eine Änderung der auf die Windenergieanlage ausgeübten Kraft detektiert wird, wenn eine Differenzkraft zwischen einer ersten und einer zweiten Kraft oberhalb einem ersten vordefinierten Differenzkraftschwellenwert liegt, und keine Änderung der auf die Windenergieanlage ausgeübten Kraft detektiert wird, wenn die Differenzkraft auf oder unter dem Differenzkraftschwellenwert liegt.

5. Verfahren nach einem der vorhergehenden Ansprüche, wobei die Änderung der mindestens einen Kraft in Schritt a) detektiert wird, indem eine überwachte Kraft einen vordefinierten Kraftschwellenwert überschreitet.

6. Verfahren nach einem der vorhergehenden Ansprüche, wobei die Energie für das Verstellen der Rotorblätter (18) aus einer Notstromversorgung, insbesondere einem Akkumulator, der Windenergieanlage (10) entnommen wird.

7. Verfahren nach Anspruch 6, wobei die Notstromversorgung im Notbetrieb für zwei oder mehr Verstellvorgänge aller Rotorblätter (18) ausgelegt ist, insbesondere wenn jeder Verstellvorgang eine Drehung jedes Rotorblatts (18) um seine Längsachse (32) um mindestens 90 Grad umfasst.

8. Verfahren nach einem der vorhergehenden Ansprüche, wobei die Rotorblätter (18) um 360 Grad um die Längsachse (32) herum drehbar sind.

9. Verfahren nach einem der vorhergehenden Ansprüche, wobei die Rotorblätter (18) einzeln verstellt werden.

10. Steuerung für eine Windenergieanlage (10), wobei die Steuerung eingerichtet ist, das Verfahren nach einem der Ansprüche 1 bis 9 durchzuführen.

11. Steuerung nach Anspruch 10, wobei die Steuerung mindestens einen Sensor zum Detektieren einer Änderung einer Windrichtung (26) und/oder einer Änderung einer auf die Windenergieanlage ausgeübten Kraft umfasst.

12. Windenergieanlage mit einer Steuerung nach Anspruch 10 oder 11.

## Claims

1. A method for a wind turbine (10) in an emergency mode comprising the following steps:
a) detecting (52) a change in a wind direction (26) and/ a change in at least one force exerted on the wind turbine,
b) maintaining (54) the yaw angle of the yaw setting, and
c) adjusting (56) at least one of the rotor blades (18) in dependence on the detected change
**characterized in that**
the wind speed (26) is determined and step c) is carried out only when the wind speed (26) is above a predefined wind speed threshold value.

2. A method according to claim 1 wherein in step c) the at least one rotor blade (18) is adjusted to an angle which differs from an angle for a feathered position of the rotor blade (18) with the retained yaw angle.

3. A method according to claim 1 or claim 2 wherein the at least one rotor blade (18) in step c) is set to an angle at which the or another force on the wind turbine, in particular forces and/or bending moments acting on the at least one rotor blade (18) and/or the rotor (16) and/or the rotor shaft (28) is minimised in comparison with a plurality of or all other angles.

4. A method according to one of the preceding claims wherein a change in a wind direction (26) is detected when a horizontal differential value between a first and a second wind direction (26) is above a predefined differential angle threshold value and no change in the wind direction (26) is detected when the differential angle is at or below the differential angle threshold value, and/or
a change in the force exerted on the wind turbine is detected when a differential force between a first and a second force is above a first predefined differential force threshold value and no change in the force exerted on the wind turbine is detected when the differential force is at or below the differential force threshold value.

5. A method according to one of the preceding claims wherein the change in the at least one force is detected in step a) by a monitored force exceeding a predefined force threshold value.

6. A method according to one of the preceding claims wherein the power for adjustment of the rotor blades (18) is taken from an emergency power supply, in particular an accumulator, of the wind turbine (10).

7. A method according to claim 6 wherein the emergency power supply in the emergency mode is designed for two or more adjustment operations of all rotor blades (18), in particular when each adjustment operation includes a rotation of each rotor blade (18) about its longitudinal axis (32) through at least 90 degrees.

8. A method according to one of the preceding claims wherein the rotor blades (18) are rotatable through 360 degrees about the longitudinal axis (32).

9. A method according to one of the preceding claims wherein the rotor blades (18) are adjusted individually.

10. A control means for a wind turbine (10), wherein the control means is adapted to carry out the method according to one of claims 1 to 9.

11. A control means according to claim 10 wherein the control means includes at least one sensor for detecting a change in a wind direction (26) and/or a change in a force exerted on the wind turbine.

12. A wind turbine comprising a control means according to claim 10 or claim 11.

## Revendications

1. Procédé pour une éolienne (10) en régime de secours, avec des étapes suivantes :
a) de détection (52) d'un changement d'une direction du vent (26) et/ou d'un changement d'au moins une force exercée sur l'éolienne,
b) de conservation (54) de l'angle d'azimut du réglage d'azimut, et
c) d'ajustement (56) d'au moins une des pales de rotor (18) en fonction du changement détecté,
**caractérisé en ce que**
la vitesse du vent (26) est définie et l'étape c) est exécutée alors seulement lorsque la vitesse du vent (26) se situe au-dessus d'une valeur de seuil de vitesse du vent prédéfinie.

2. Procédé selon la revendication 1, dans lequel lors de l'étape c), l'au moins une pale de rotor (18) est ajustée selon un angle, qui se distingue d'un angle pour une position en drapeau de la pale de rotor (18) à l'angle d'azimut conservé.

3. Procédé selon la revendication 1 ou 2, dans lequel l'au moins une pale de rotor (18) est réglée lors de l'étape c) sur un angle, auquel la ou une autre force sur l'éolienne, en particulier des forces et/ou des couples de flexion agissant sur l'au moins une pale de rotor (18) et/ou le rotor (16) et/ou l'axe de rotor (28) est minimisée en comparaison avec plusieurs ou tous les autres angles.

4. Procédé selon l'une quelconque des revendications précédentes, dans lequel un changement d'une direction du vent (26) est détecté lorsqu'un angle différentiel horizontal entre une première et une deuxième direction du vent (26) se situe au-dessus d'une valeur de seuil d'angle différentiel prédéfinie, et aucune modification de la direction du vent (26) n'est détectée lorsque l'angle différentiel se situe sur ou sous la valeur de seuil d'angle différentiel, et/ou
un changement de la force exercée sur l'éolienne est détecté, lorsqu'une force différentielle entre une première et une deuxième force se situe au-dessus d'une première valeur de seuil de force différentielle prédéfinie, et aucun changement de la force exercée sur l'éolienne n'est détecté lorsque la force différentielle se situe sur ou sous la valeur de seuil de force différentielle.

5. Procédé selon l'une quelconque des revendications précédentes, dans lequel le changement de l'au moins une force est détecté lors de l'étape a) en ce qu'une force surveillée ne dépasse pas une valeur de seuil de force prédéfinie.

6. Procédé selon l'une quelconque des revendications précédentes, dans lequel l'énergie pour l'ajustement des pales de rotor (18) est prélevée d'une alimentation électrique de secours, en particulier d'un accumulateur, de l'éolienne (10).

7. Procédé selon la revendication 6, dans lequel l'alimentation électrique de secours est conçue en régime de secours pour deux opérations d'ajustement ou plus de toutes les pales de rotor (18), en particulier lorsque chaque opération d'ajustement comprend une rotation de chaque pale de rotor (18) autour de son axe longitudinal (32) d'au moins 90 degrés.

8. Procédé selon l'une quelconque des revendications précédentes, dans lequel les pales de rotor (18) peuvent être tournées tout autour de l'axe longitudinal (32) de 360 degrés.

9. Procédé selon l'une quelconque des revendications précédentes, dans lequel les pales de rotor (18) sont ajustées individuellement.

10. Commande pour une éolienne (10), dans laquelle la commande est mise au point pour mettre en œuvre le procédé selon l'une quelconque des revendications 1 à 9.

11. Commande selon la revendication 10, dans laquelle la commande comprend au moins un capteur pour détecter un changement d'une direction du vent (26) et/ou un changement d'une force exercée sur l'éolienne.

12. Eolienne avec une commande selon la revendication 10 ou 11.
